(19) Europäisches Patentamt
European Patent Office
Office européen des brevets

(11) **EP 2 357 163 B1**

(12) **EUROPEAN PATENT SPECIFICATION**

(45) Date of publication and mention
of the grant of the patent:
**06.05.2015 Bulletin 2015/19**

(51) Int Cl.:
**C04B 35/628** (2006.01)     **C04B 35/80** (2006.01)

(21) Application number: **11250058.2**

(22) Date of filing: **19.01.2011**

(54) **Ceramic composite article and method therefor**

Keramikverbundstoffartikel und Verfahren dafür

Article composite en céramique et son procédé

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.01.2010 US 689507**

(43) Date of publication of application:
**17.08.2011 Bulletin 2011/33**

(73) Proprietor: **United Technologies Corporation
Hartford, CT 06101 (US)**

(72) Inventors:
• **Kmetz, Michael A.
Colchester, Connecticut 06415 (US)**
• **Newton, Kirk C.
Enfield, Connecticut 06082 (US)**

(74) Representative: **Hall, Matthew Benjamin
Dehns
St. Bride's House
10 Salisbury Square
London EC4Y 8JD (GB)**

(56) References cited:
**WO-A1-02/10090     GB-A- 2 467 928
US-A- 5 876 659     US-B1- 6 218 324**

• **JUN C. NABLE ETAL.: "Aluminum Oxide and
Chromium Oxide Coatings on Ceramic Fibers via
MOCVD", CHEM. MATER., vol. 15, 2003, pages
4823-4829, XP002629822,**

**Description**

This disclosure relates to ceramic matrix composites. Fiber-reinforced ceramic matrix composites are known and used in high temperature structural applications, such as aerospace applications. The mechanical strength and toughness of a ceramic matrix composite is dependent to a large degree on the interface between the reinforcing fibers and the matrix. This interface is responsible for bonding and debonding between the fiber and the matrix. If bonding between the fiber and the matrix is strong, the composite acts as a monolith and fails in a brittle manner. On the other hand, if the bonding between the fiber and the matrix is weak, the fibers pull away from the matrix such that there is interfacial debonding and crack deflection which toughens the composite. In some example ceramic matrix composites, an interfacial material between the fibers and the matrix is used to enhance the interfacial properties.

US 5,876,659 discloses fiber bundle reinforced composite materials comprising inorganic fiber bundles within a ceramic matrix. To prevent reactions between the fiber bundles and the ceramic matrix, the fiber bundles may be coated by a non-reactive intermediate layer (e.g. zinc oxide).

Jun C. Nable et al. in "Aluminium Oxide and Chromium Oxide Coatings on Ceramic Fibers via MOCVD", Chem. Mater., vol. 15, 2003, pages 4823-4829 discloses the use of chemical vapor deposition to provide a protective metal oxide coating (particularly aluminium oxide or chromium oxide) on fibers for a ceramic matrix composite.

WO 02/10090 A1 discloses a ceramic matrix interspersed with ceramic reinforcement fibres, wherein the ceramic fibers are coated with $ZrGeO_4$, $HfGeO_4$ or $CeGeO_4$.

US 6,218,324 discloses a ceramic matrix in which is dispersed reinforcement fibers, particulates, laminate or whiskers surrounded by $SrWO_4$, $BaWO_4$, $SrMoO_4$, $BaMoO_4$, $FeWO_4$, $FeMoO_4$, $MnWO_4$, $MnMoO_4$, $ZnWO_4$, $ZnMoO_4$, $PbWO_4$ or $PbMoWO_4$.

According to a first aspect of the present invention there is provided a ceramic composite article comprising: ceramic reinforcement fibers each having an outer surface; and a continuous zinc oxide coating disposed on the ceramic reinforcement fibers and in contact with the outer surfaces. The ceramic composite article of the present invention is characterized in that the continuous zinc oxide coating is less than 0.5 $\mu$m thick and does not form a chemical bond with the ceramic reinforcement fibers.

There is disclosed herein a ceramic composite article that includes an oxide ceramic matrix, oxide ceramic reinforcement fibers having an outer surface and being dispersed within the oxide ceramic matrix, and a continuous zinc oxide coating disposed on the oxide ceramic reinforcement fibers and in contact with the outer surfaces.

According to a second aspect of the present invention there is provided a method for processing a ceramic composite article that includes depositing a continuous zinc oxide coating using chemical vapor deposition to a thickness of less than 0.5 $\mu$m directly onto outer surfaces of ceramic reinforcement fibers and forming a ceramic matrix in which the coated ceramic reinforcement fibers are dispersed. The continuous zinc oxide coating does not form a chemical band with the ceramic reinforcement fibers.

Certain preferred embodiments of the present invention will now be described in greater detail by way of example only and with reference to the accompanying drawings in which:

Figure 1 illustrates an example ceramic composite article; and
Figure 2 illustrates another example ceramic composite article.

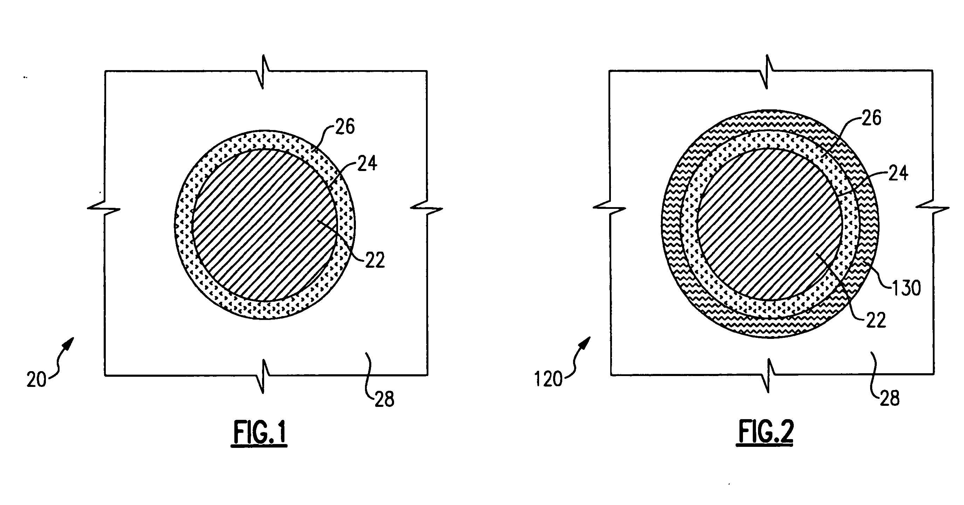

Figure 1 illustrates selected portions of an example ceramic composite article 20 that may be used in high temperature, structural applications. In some examples, the ceramic composite article 20 may be a turbine engine component. it is to be understood, however, that the ceramic composite article 20 is not necessarily limited to any type of component.

The ceramic composite article 20 includes a plurality of ceramic reinforcement fibers 22 (one shown) each having an outer surface 24. A continuous zinc oxide coating 26 (ZnO) is disposed on the outer surface 24 of the ceramic reinforcement fiber 22 such that the continuous zinc oxide coating 26 is in contact with the outer surface 24. The continuous zinc oxide coating 26 may completely surround the ceramic reinforcement fibers 22. The continuous zinc oxide coating 26 (ZnO) is less than 0.5 micrometers thick. In some examples, the continuous zinc oxide coating 26 (ZnO) may be approximately 0.1-0.3 micrometers thick. It is to be understood that although a single ceramic reinforcement fiber 22 is shown, the ceramic composite article 20 includes a plurality of such fibers in a desired arrangement, such as a fabric or other type of fiber structure. That is, this disclosure is not limited to any type of fiber structure.

One premise of this disclosure is that the use of the continuous zinc oxide coating 26 as an interfacial material between the ceramic reinforcement fibers 22 and the ceramic matrix 28 provides desirable bonding/debonding properties because of the relative softness of zinc oxide that allows for compliancy while maintaining high temperature resistance and the ability to deposit the zinc oxide without forming a chemical bond between the zinc oxide and the underlying fiber. As an example, zinc oxide generally has a hardness of about 4.0 on the Mohs scale whereas, for comparison, talc has a hardness of 1.0 and diamond has a hardness of 10. Moreover, zinc oxide has a relatively high melting point of around 1977°C and therefore is not expected to thermally degrade in high temperature applications or exhibit a substantial reduction in mechanical characteristics at elevated use temperatures.

In the illustrated example, the ceramic reinforcement fiber 22 with continuous zinc oxide coating 26 is dispersed within a ceramic matrix 28. That is, the ceramic matrix 28 extends between the ceramic reinforcement fibers 22 to form the body of the ceramic matrix composite article 20.

The materials selected for the ceramic reinforcement fibers 22 and the ceramic matrix 28 may depend upon the intended end use. In some examples, the ceramic reinforcement fibers 22 may be alumina ($Al_2O_3$) or silicon carbide (SiC). It is to be understood however, that given this description, one of ordinary skill in the art will be able to select other types of ceramic materials to suit their particular needs. Likewise, the ceramic material selected for the ceramic matrix 28 may also be selected to suit the particular needs of an end use application. In a few examples, the ceramic matrix 28 may be silicon carbide (SiC), aluminum silicate (mullite, $Al_6Si_2O_{13}$), alumina, silicon oxynitride, or even mixtures thereof.

Figure 2 illustrates another example ceramic composite article 120. In this disclosure, like reference numerals designate like elements where appropriate, and reference numerals with the addition of one-hundred or multiples thereof designate modified elements. The modified elements are understood to incorporate the same features and benefits of the corresponding original elements. In this example, the ceramic composite article 120 additionally includes a protective coating 130 disposed directly on the continuous zinc oxide coating 26. For instance, the protective coating 130 may be a continuous oxide coating of silica, alumina, or other type of stable oxide.

The protective coating 130 serves to protect the underlying continuous zinc oxide coating 26 from chemical reduction to zinc metal under reducing atmospheres. For instance, the ceramic composite article 120 may be exposed to a reducing atmosphere in conjunction with deposition of the ceramic matrix 28 around the coated fibers 22. In addition, the ceramic composite article 120 may used in a reducing atmosphere such that it is desirable to protect the continuous zinc oxide coating 26 from chemical reduction.

In some examples where the material selected for the ceramic matrix 28 does not require using a reducing atmosphere or the intended end use environment of the ceramic composite article 120 will not include a reducing atmosphere, there may be no need to use the protective coating 130. Thus, the protective coating 130 may be used in instances where silicon carbide is selected as the ceramic matrix 28 due to the reducing atmosphere that may be used to deposit the silicon carbide. However, if the ceramic matrix 28 is an oxide material, such as alumina, aluminum silicate or silicon oxynitride, there may be no need to use the protective coating 130, as these ceramic matrix materials do not typically utilize reducing atmospheres during deposition.

In some examples that may be suited for use in oxidizing atmospheres, the material selected for the ceramic reinforcement fibers 22 and the ceramic matrix 28 may be oxide materials. For instance, the ceramic reinforcement fibers 22 may be oxide ceramic reinforcement fibers and the ceramic matrix 28 may be an oxide ceramic matrix. For instance, the ceramic reinforcement fibers 22 may be alumina and the ceramic matrix 28 may be aluminum silicate, alumina, silicon oxynitride, or even combinations thereof.

The ceramic composite articles 20 and 120 may be fabricated by depositing the continuous zinc oxide coating 26 directly onto the outer surfaces 24 of the ceramic reinforcement fibers 22. The ceramic matrix 28 may then be formed such that the coated ceramic reinforcement fibers 22 are dispersed within the ceramic matrix 28. The continuous zinc oxide coating 26 is deposited onto the outer surfaces 24 using chemical vapor deposition techniques, which does not degrade the underlying ceramic reinforcement fibers 22 or form a chemical bond between the ceramic reinforcement fibers 22 and the continuous zinc oxide coating 26. For instance, scanning Auger microscopy was used to determine the composition as a function of depth through the interface between the continuous zinc oxide coating 26 and the ceramic reinforcement fibers 22. In the case of chemical vapor deposition, there was a clean transition between the coating and the fibers. In other words, the continuous zinc oxide coating 26 did not react with the fibers to form intermediates or carbonaceous species at the interface that could diminish the desired interface properties. After deposition of the continuous zinc oxide coating 26, the ceramic matrix 28 may be deposited onto the coated ceramic reinforcement fibers 22 using known techniques, such as sol-gel processing, chemical vapor deposition, preceramic polymer pyrolysis, or other known techniques.

In one example chemical vapor deposition technique using a precursor of zinc acetate dihydrate, the continuous zinc oxide coating 26 was deposited in a hot-walled isothermal, isobaric reactor according to the reactions shown below in Equations (1) and (2). The reactor included of a fused silica (quartz) tube of about 7.6 centimeters in diameter with a mullite insert that was about 6.35 centimeters in diameter. The mullite insert was used to protect the quartz tube from the deposited zinc oxide. Stainless steel end caps with fluoroelastomer o-rings and compression fittings were used to seal off the reactor and deliver the precursor gases. Mass flow controllers were used to control the flow of gaseous precursors to approximately 100-300 sccm. Several absolute pressure transducers were used to monitor the pressure inside the reactor. A liquid nitrogen trap and a particulate trap were used to collect the by-products. A vacuum pump provided a vacuum.

$$(1) \qquad 4[Zn(CH_3CO_2)_2 . 2H_2O] \xrightarrow[P<1atm]{\Delta} Zn_4O(CH_3CO_2)_{6(s)} + 7H_2O_{(g)} +$$

$$(CH_3CO)_2O_{(g)}$$

$$(2) \qquad Zn_4O(CH_3CO_2)_{6(s)} \xrightarrow{\Delta} 4ZnO_{(s)} + 3[(CH_3CO)_2O]_{(g)}$$

A section of ceramic cloth of the ceramic reinforcing fibers 22 was first placed into the quartz tube. A precursor holder (around 10 centimeters long) was made by simply folding aluminum foil into a boat shape form. The boat was then filled approximately halfway up with the zinc acetate (around 35g). The precursor boat was then loaded into the quartz tube inside the vaporizing furnace and the whole tube was evacuated down to less than 1 torr (133 Pa). The reactor and precursor vaporizer furnaces were then brought up to the desired temperature of approximately 250°C and 300-500°C, respectively. The reaction was considered started when a nitrogen carrier gas was allowed to flow over the precursor boat. A deposition time of approximately 1-4 hours may be used to deposit the continuous zinc oxide coating 26 with a thickness of less than approximately 0.5 micrometers. Ceramic composite articles 20 made in such a manner exhibited fiber pull-out from the ceramic matrix 28 and crack deflection along the interface of the continuous zinc oxide coating 26. Therefore, the continuous zinc oxide coating 26 is beneficial as an interface material for toughening the composite ceramic article 20.

In a further example utilizing the protective coating 130, silicon dioxide was deposited from the thermal decomposition of reagent grade tetraethylorthosilicate (TEOS). To deposit the silicon dioxide coating on the zinc oxide coated fabric, nitrogen was bubbled through TEOS at a rate of 125 sccm. The deposition temperature was held at 700°C and the reactor was kept at atmospheric pressure. Deposition times may be varied in accordance with the quantity of cloth used, and the desired thickness of the silicon dioxide layer. When the silicon dioxide layer was deposited to protect the zinc oxide from being reduced during the matrix infiltration process, the layer was kept around 100 $\mu$m. When this process was used to deposit a silicon dioxide matrix to make a Nextel/$ZnO_2$/$SiO_2$ composite the infiltration time were around 24 hrs.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. The scope of legal protection given to this disclosure can only be determined by studying the following claims.

**Claims**

1.   A ceramic composite article comprising:

    ceramic reinforcement fibers each having an outer surface; and
    a continuous zinc oxide coating disposed on the ceramic reinforcement fibers and in contact with the outer surfaces,
    **characterized in that** the continuous zinc oxide coating is less than 0.5 $\mu$m thick and does not form a chemical bond with the ceramic reinforcement fibers.

2.   The ceramic composite article as recited in claim 1, wherein the continuous zinc oxide coating is 0.1-0.3 $\mu$m thick.

3.   The ceramic composite article as recited in claim 1 or 2, wherein the ceramic reinforcement fibers are alumina fibers.

4.   The ceramic composite article as recited in claim 1 or 2, wherein the ceramic reinforcement fibers are silicon carbide fibers.

5.   The ceramic composite article as recited in any preceding claim, further comprising a continuous oxide coating, preferably of silicon dioxide, disposed directly on the continuous zinc oxide coating.

6.   The ceramic composite article as recited in any of claims 1 to 4, further comprising a continuous coating of silica or alumina disposed directly on the continuous zinc oxide coating.

7. The ceramic composite article as recited in any preceding claim, further comprising a ceramic matrix, preferably an oxide, throughout which the ceramic reinforcement fibers are dispersed.

8. The ceramic composite article as recited in claim 7, wherein the ceramic matrix is selected from a group consisting of alumina, aluminum silicate, silicon oxynitride, and combinations thereof.

9. The ceramic composite article as recited in claim 7, wherein the ceramic reinforcement fibers are silicon carbide fibers, the ceramic matrix is silicon carbide, and there is a continuous coating of silica or alumina disposed directly on the continuous zinc oxide coating.

10. A method for processing a ceramic composite article, comprising:

   depositing a continuous zinc oxide coating using chemical vapor deposition to a thickness of less than 0.5 $\mu$m directly onto outer surfaces of ceramic reinforcement fibers; and
   forming a ceramic matrix in which the coated ceramic reinforcement fibers are dispersed,
   wherein the continuous zinc oxide coating does not form a chemical bond with the ceramic reinforcement fibers.

11. The method as recited in claim 10, wherein chemical vapour deposition is used to deposit the continuous zinc oxide layer and wherein a deposition time of 1-4 hours is used to deposit the continuous zinc oxide layer to the thickness of less than 0.5 $\mu$m.

12. The method as recited in claim 10 or 11, including forming the ceramic matrix from a group consisting of silicon carbide, aluminum silicate, silicon oxynitride, alumina, and combinations thereof.

13. The method as recited in any of claims 10 to 12, wherein the ceramic reinforcement fibers are alumina fibers or silicon carbide fibers, and preferably the ceramic reinforcement fibers are alumina fibers if the ceramic matrix is an oxide.

14. The method as recited in any of claims 10 to 13, including depositing a silicon dioxide layer onto the continuous zinc oxide coating, wherein the silicon dioxide layer is approximately 100 $\mu$m thick.

15. The method as recited in claim 14, wherein the silicon dioxide layer is deposited from the thermal decomposition of tetraethylorthosilicate (TEOS) by bubbling nitrogen through the TEOS at a rate of 125 sccm and wherein the temperature is held at 700°C and the pressure is held at atmospheric pressure and wherein the infiltration time is approximately 24 hours.

## Patentansprüche

1. Keramikverbundartikel, umfassend:

   Keramikverstärkungsfasern, die jeweils eine Außenfläche aufweisen; und
   eine kontinuierliche Zinkoxidbeschichtung, die an den Keramikverstärkungsfasern angeordnet und in Kontakt mit den Außenflächen ist,
   **dadurch gekennzeichnet, dass** die kontinuierliche Zinkoxidbeschichtung weniger als 0,5 $\mu$m dick ist und keine chemische Bindung mit den Keramikverstärkungsfasern bildet.

2. Keramikverbundartikel nach Anspruch 1, wobei die kontinuierliche Zinkoxidbeschichtung 0,1 bis 0,3 $\mu$m dick ist.

3. Keramikverbundartikel nach Anspruch 1 oder 2, wobei die Keramikverstärkungsfasern Aluminiumoxidfasern sind.

4. Keramikverbundartikel nach Anspruch 1 oder 2, wobei die Keramikverstärkungsfasern Siliziumkarbidfasern sind.

5. Keramikverbundartikel nach einem der vorangehenden Ansprüche, ferner umfassend eine kontinuierliche Oxidbeschichtung, vorzugsweise aus Siliziumdioxid, die unmittelbar auf der kontinuierlichen Zinkoxidbeschichtung angeordnet ist.

6. Keramikverbundartikel nach einem der Ansprüche 1 bis 4, ferner umfassend eine kontinuierliche Beschichtung aus Siliziumoxid oder Aluminiumoxid, die unmittelbar auf der kontinuierlichen Zinkoxidbeschichtung angeordnet ist.

**7.** Keramikverbundartikel nach einem der vorangehenden Ansprüche, ferner umfassend eine Keramikmatrix, vorzugsweise ein Oxid, in der die Keramikverstärkungsfasern verteilt sind.

**8.** Keramikverbundartikel nach Anspruch 7, wobei die Keramikmatrix ausgewählt ist aus einer Gruppe bestehend aus Aluminiumoxid, Aluminiumsilikat, Siliziumoxynitrid und Kombinationen derselben.

**9.** Keramikverbundartikel nach Anspruch 7, wobei die Keramikverstärkungsfasern Siliziumkarbidfasern sind, die Keramikmatrix Siliziumkarbid ist und eine kontinuierliche Beschichtung aus Siliziumoxid oder Aluminiumoxid unmittelbar auf der kontinuierlichen Zinkoxidbeschichtung angeordnet ist.

**10.** Verfahren zum Verarbeiten eines Keramikverbundartikels, umfassend:

Abscheiden einer kontinuierlichen Zinkoxidbeschichtung mithilfe von chemischem Dampfabscheiden in einer Dicke von weniger als 0,5 $\mu$m unmittelbar auf der Außenfläche von Keramikverstärkungsfasern; und
Bilden einer Keramikmatrix, in der die beschichteten Keramikverstärkungsfasern verteilt werden,
wobei die kontinuierliche Zinkoxidbeschichtung keine chemische Bindung mit den Keramikverstärkungsfasern bildet.

**11.** Verfahren nach Anspruch 10, wobei chemisches Dampfabscheiden benutzt wird, um die kontinuierliche Zinkoxidschicht abzuscheiden, und wobei eine Abscheidungsdauer von 1 bis 4 Stunden benutzt wird, um die kontinuierliche Zinkoxidschicht in einer Dicke von weniger als 0,5 $\mu$m abzuscheiden.

**12.** Verfahren nach Anspruch 10 oder 11, einschließend Bilden der Keramikmatrix aus einer Gruppe bestehend aus Aluminiumoxid, Aluminiumsilikat, Siliziumoxynitrid und Kombinationen derselben.

**13.** Verfahren nach einem der Ansprüche 10 bis 12, wobei die Keramikverstärkungsfasern Aluminiumoxidfasern oder Siliziumkarbidfasern sind, und wobei die Keramikverstärkungsfasern vorzugsweise Aluminiumoxidfasern sind, wenn die Keramikmatrix ein Oxid ist.

**14.** Verfahren nach einem der Ansprüche 10 bis 13, einschließend Abscheiden einer Siliziumdioxidschicht auf der kontinuierlichen Zinkoxidbeschichtung, wobei die Siliziumdioxidschicht etwa 100 $\mu$m dick ist.

**15.** Verfahren nach Anspruch 14, wobei die Siliziumdioxidschicht durch den thermischen Abbau von Tetraethylorthosilikat (TEOS) abgeschieden wird, indem Stickstoff mit einer Strömungsrate von 125 sccm unter Blasenbildung durch das TEOS geleitet wird und wobei die Temperatur bei 700 °C gehalten wird und der Druck bei Atmosphärendruck gehalten wird und wobei die Infiltrationsdauer etwa 24 Stunden beträgt.

**Revendications**

**1.** Article composite en céramique comprenant :

des fibres de renfort de céramique présentant chacune une surface extérieure ; et
un revêtement continu en oxyde de zinc disposé sur les fibres de renfort de céramique et en contact avec les surfaces extérieures,
**caractérisé en ce que** le revêtement continu en oxyde de zinc a une épaisseur de moins de 0,5 $\mu$m et ne forme pas une liaison chimique avec les fibres de renfort de céramique

**2.** Article composite en céramique selon la revendication 1, dans lequel le revêtement continu en oxyde de zinc a une épaisseur comprise entre 0,1 et 0,3 $\mu$m.

**3.** Article composite en céramique selon la revendication 1 ou 2, dans lequel les fibres de renfort de céramique sont des fibres en alumine.

**4.** Article composite en céramique selon la revendication 1 ou 2, dans lequel les fibres de renfort de céramique sont des fibres en carbure de silicium.

**5.** Article composite en céramique selon l'une quelconque des revendications précédentes, comprenant en outre un revêtement continu en oxyde, de préférence en dioxyde de silicium, disposé directement sur le revêtement continu en oxyde de zinc.

**6.** Article composite en céramique selon l'une quelconque des revendications 1 à 4, comprenant en outre un revêtement continu de silice ou d'alumine disposé directement sur le revêtement continu en oxyde de zinc.

**7.** Article composite en céramique selon l'une quelconque des revendications précédentes, comprenant en outre une matrice en céramique, de préférence un oxyde, à travers laquelle les fibres de renfort de céramique sont dispersées.

**8.** Article composite en céramique selon la revendication 7, dans lequel la matrice en céramique est choisie dans un groupe constitué d'alumine, de silicate d'aluminium, d'oxynitrure de silicium et de leurs combinaisons.

**9.** Article composite en céramique selon la revendication 7, dans lequel les fibres de renfort de céramique sont des fibres en carbures de silicium, la matrice en céramique est en carbure de silicium et il existe un revêtement continu de silice ou d'alumine disposé directement sur le revêtement continu en oxyde de zinc.

**10.** Procédé de traitement d'un article composite en céramique, comprenant :

le dépôt d'un revêtement continu en oxyde de zinc à l'aide d'un dépôt chimique en phase vapeur jusqu'à une épaisseur inférieure à 0,5 μm directement sur les surfaces extérieures des fibres de renfort de céramique ; et
la formation d'une matrice en céramique dans laquelle les fibres revêtues de renfort de céramique sont dispersées,
le revêtement continu en oxyde de zinc ne formant pas de liaison chimique avec les fibres de renfort de céramique.

**11.** Procédé selon la revendication 10, dans lequel on utilise un dépôt chimique en phase vapeur pour déposer la couche continue d'oxyde de zinc et où une durée de dépôt comprise entre 1 et 4 h sert à déposer la couche continue d'oxyde de zinc jusqu'à l'épaisseur de moins de 0,5 μm.

**12.** Procédé selon la revendication 10 ou 11, comprenant la formation de la matrice céramique à partir d'un groupe constitué de carbure de silicium, de silicate d'aluminium, d'oxynitrure de silicium, d'alumine et de leurs combinaisons.

**13.** Procédé selon l'une quelconque des revendications 10 à 12, dans lequel les fibres de renfort de céramique sont des fibres en alumine ou des fibres en carbure de silicium, et de préférence les fibres de renfort de céramique sont des fibres en alumine si la matrice en céramique est un oxyde.

**14.** Procédé selon l'une quelconque des revendications 10 à 13, comprenant le dépôt d'une couche de dioxyde de silicium sur le revêtement continu en oxyde de zinc, la couche de dioxyde de silicium ayant une épaisseur proche de 100 μm.

**15.** Procédé selon la revendication 14, dans lequel la couche de dioxyde de silicium est déposée à partir de la décomposition thermique du tétraéthylorthosilicate (TEOS) par bullage d'azote à travers le TEOS à un taux de 125 sccm et où la température est maintenue à 700 °C et où la pression est maintenue à une pression atmosphérique et dans lequel la durée d'infiltration avoisine 24 h.

FIG.1

FIG.2

EP 2 357 163 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5876659 A
- WO 0210090 A1
- US 6218324 B

### Non-patent literature cited in the description

- **JUN C. NABLE et al.** Aluminium Oxide and Chromium Oxide Coatings on Ceramic Fibers via MOCVD. *Chem. Mater.,* 2003, vol. 15, 4823-4829